# EUROPEAN PATENT APPLICATION

(11) **EP 3 460 363 A1**
(43) Date of publication of application: **27.03.2019**
(21) Application number: 17207127.6
(22) Date of filing: 13.12.2017
(51) Int. Cl.: F25D 17/04, F25D 17/08, F25D 19/00, F25D 29/00, B60H 1/00, B60H 1/32, B60H 1/34, H01M 2/10, H01M 10/6563, H01M 10/6556, H01M 10/6566, H01M 10/6562

(54) **Battery cooling container**

(30) Priority: 26.09.2017 KR 20170123992
(71) Applicant: Ace Engineering & Co. Ltd., Seoul 06752 (KR)
(72) Inventor: YOU, Insun, 06586 Seoul (KR); YOU, Daeyeon, 06597 Seoul (KR)
(74) Representative: Treeby, Philip David William

(57) **Abstract**

An exemplary embodiment of the present disclosure provides a functional container (1000) which provides a hermetic space therein, the functional container (1000) including:
an outer wall (110) which includes a thermal insulation layer and is formed in the form of a hexahedron to provide the hermetic space; a battery rack (200) in which one or more battery modules are stacked and accommodated; a refrigeration unit (300) which includes an evaporator (310), a compressor (320), and a condenser (330), and is provided adjacent to at least one of inner surfaces of the outer wall (110) of the container (1000) to provide cold air into the container (1000);
and an air hole (400) through which the cold air produced by the refrigeration unit (300) is discharged.

## Description

### CROSS-REFERENCE TO RELATED APPLICATIONS

This application claims priority to and the benefit of Korean Patent Application No. 10-2017-0123992 filed in the Korean Intellectual Property Office on SEPTEMBER 26, 2017, the entire contents of which are incorporated herein by reference.

### TECHNICAL FIELD

The present disclosure relates to a cooling container, and more particularly, to a container for cooling a battery module.

### BACKGROUND ART

As trade among countries has increased, types and quantities of items to be transported through containers have been rapidly increased. In this case, to maintain a low temperature of items such as frozen food, a refrigeration container is used to transport the items. That is, in some instances, container carriers essentially require the refrigeration containers to transport the containers over a long period of time.

In general, the refrigeration container is cooled by supplying electric power to a refrigeration unit separately installed in the refrigeration container. Alternatively, the refrigeration container may be cooled by circulating air, which is cooled by a cooling system installed in the container carrier, into the refrigeration container.

Korean Patent Application Laid-Open No. 10-2011-0128080 discloses a container carrier on which refrigeration containers are loaded.

### SUMMARY OF THE INVENTION

The present disclosure has been made in an effort to provide a container for cooling an accommodated battery that generates heat.

A functional container according to an exemplary embodiment of the present disclosure, which provides a hermetic space therein, may include: an outer wall which includes a thermal insulation layer and is formed in the form of a hexahedron to provide the hermetic space; a battery rack in which one or more battery modules are stacked and accommodated; a refrigeration unit which includes an evaporator, a compressor, and a condenser, and is provided adjacent to at least one of inner surfaces of the outer wall of the container to provide cold air into the container; and an air hole through which the cold air produced by the refrigeration unit is discharged.

In another exemplary embodiment, the container may include one or more cold air delivery ducts, in which the cold air delivery duct is provided adjacent to at least one of the inner surfaces of the container, and connected to the air hole.

In still another exemplary embodiment, the container may include one or more cold air discharge ducts, in which the cold air discharge duct is connected to the cold air delivery duct, and has one or more cold air discharge ports.

In yet another exemplary embodiment, the cold air discharge duct may be provided adjacent to at least one of the inner surfaces of the container, and the cold air discharge port may be directed toward a position at which the battery rack is positioned.

In still yet another exemplary embodiment, the cold air discharge port may be provided to correspond to at least a part of a layer where the battery module is present in the battery rack.

In a further exemplary embodiment, the cold air discharge duct may be made of a soft material.

In another further exemplary embodiment, the cold air discharge duct may be fixed by being detachably coupled to a fastener positioned on a ceiling of the inner surfaces of the outer wall.

In still another further exemplary embodiment, the refrigeration unit may be provided adjacent to a narrow inner surface of the inner surfaces of the outer wall.

In yet another further exemplary embodiment, the refrigeration units may be provided adjacent to two narrow inner surfaces of the inner surfaces of the outer wall.

In still yet another further exemplary embodiment, the cold air delivery duct may be provided adjacent to a lower side of a wide inner surface of the inner surfaces of the outer wall, and connected to the air hole.

In a still further exemplary embodiment, the container may include one or more doors, in which the door is provided on at least one of the inner surfaces of the outer wall.

In a yet still further exemplary embodiment, the doors may be provided on one or more wide inner surfaces of the inner surfaces of the outer wall.

According to the exemplary embodiment of the present disclosure, it is possible to provide the container for cooling the accommodated battery that generates heat.

### BRIEF DESCRIPTION OF THE DRAWINGS

Some of the exemplary embodiments are illustrated in the appended drawings so that the recited features of the present disclosure may be understood in detail, through more specified descriptions, with respect to the following exemplary embodiments. In addition, similar references in the drawings are intended to indicate the same or similar functions in various aspects. However, it is to be noted that the appended drawings illustrate only typical exemplary embodiments of the present disclosure and are therefore not considered as limiting the scope of the present disclosure, and other exemplary embodiments having the same effects may be sufficiently conceivable.
FIG. 1 illustrates a container having a door provided in an outer wall according to an exemplary embodiment of the present disclosure.
FIG. 2 illustrates an evaporator, a compressor, a condenser, a heater-thermal expansion valve, and a ventilation device which are provided in a refrigeration unit according to the exemplary embodiment of the present disclosure.
FIG. 3 illustrates a battery rack, the refrigeration unit, air holes, and a cold air delivery duct which are provided in the container according to the exemplary embodiment of the present disclosure.
FIG. 4 illustrates the battery rack, the refrigeration unit, the air holes, and the cold air delivery duct, which are provided in the container according to the exemplary embodiment of the present disclosure, when viewed from the top side.
FIG. 5 illustrates the battery rack, the refrigeration unit, the air holes, the cold air delivery duct, and cold air discharge ducts which are provided in the container according to the exemplary embodiment of the present disclosure.
FIG. 6 is an enlarged view of the battery rack, the refrigeration unit, the air holes, the cold air delivery duct, the cold air discharge ducts, and cold air discharge ports which are provided in the container according to the exemplary embodiment of the present disclosure.

### DETAILED DESCRIPTION

Various exemplary embodiments and/or aspects will now be disclosed with reference to the drawings. A plurality of detailed matters will be disclosed for helping overall understanding of one or more aspects for the purpose of description in the following description. However, a person with ordinary skill in the art to which the present disclosure pertains will also recognize that these aspects can be implemented without such detailed matters. Hereinafter, specific exemplary aspects for one or more aspects will be described in detail in the following description with reference to the accompanying drawings. However, these aspects are illustrative only, and various methods in principles for various aspects can be partially used, and the following description is intended to include all the aspects and equivalents thereto.

It may not be construed that the terms "exemplary embodiment", "example", "aspect", and "illustrative example" used in the present specification are better than or have advantages compared to any disclosed aspect, an aspect having a different design, or designs.

The term "or" is intended to mean an inclusive "or" rather than an exclusive "or." In other words, unless otherwise defined or unless the context clearly indicates otherwise, the expression "X uses A or B" is intended to mean any one of natural inclusive permutations. That is to say, if X uses A, X uses B, or X uses both A and B, "X uses A or B" satisfies any embodiments mentioned above. Further, it should be further understood that the term "and/or" used herein refers to and includes all possible combinations of one or more of the associated listed items.

It should be further understood that the terms "comprises (includes)" and/or "comprising (including)" used herein mean the presence of stated features and/or constituent elements, but do not exclude the presence or addition of one or more other features, constituent elements and/or groups thereof. Further, unless otherwise specified or if it is contextually unclear that the term indicates a singular form, it should be construed that a singular form in the present specification and the claims generally means "one or more".

The description about the suggested exemplary embodiments is provided so that a person with ordinary skill in the art to which the present disclosure pertains may use or carry out the present disclosure. Various modifications from the exemplary embodiments will be obvious to the person skilled in the art, and general principles defined herein may be applied to other exemplary embodiments without departing from the scope of the present disclosure. Accordingly, the present disclosure is not limited to the exemplary embodiments suggested herein, but should be construed within the widest scope that complies with the principles suggested herein and novel features.

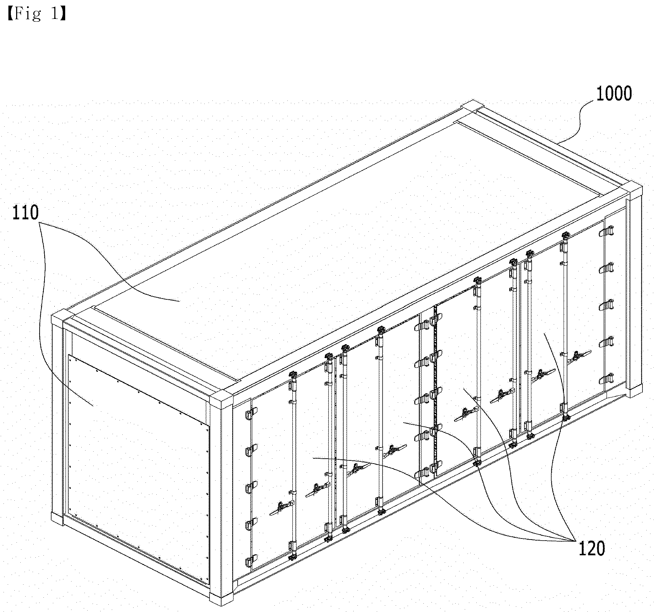

FIG. 1 illustrates a container 1000 having a door 120 provided in an outer wall 110 according to an exemplary embodiment of the present disclosure.

The container 1000 according to the exemplary embodiment of the present disclosure may be the functional container 1000 that provides a hermetic space therein. The container 1000 may be a box-shaped container used to efficiently and economically transport freight. A material used for the container may be wood, plywood, steel, aluminum, light alloy, or fiber reinforced plastic (FRP). The aforementioned material is just an example, and the present disclosure is not limited thereto.

The functional container 1000 may be the container 1000 having a structure of a battery rack 200 for efficiently stacking battery modules therein, and/or a refrigeration unit for cooling a battery.

The container 1000 may be configured by the outer wall 110 which includes a thermal insulation layer and is formed in a hexahedral shape to provide a hermetic space. The outer wall 110 may include the thermal insulation layer. The thermal insulation layer may mean a space present for preventing a thermal loss when heat is transferred for cooling and heating. For example, the thermal insulation layer may be a vacuum, and a thermal insulator may be inserted into the thermal insulation layer. The thermal insulator may be one of a bead-type thermal insulator (EPS), an extruded thermal insulating plate (Isopink), an E-board, a heat-reflective thermal insulator, glass wool, a vacuum insulated panel (VIP), a cellulose thermal insulator, and polyurethane foam.

The bead-type thermal insulator (EPS) may mean a thermal insulator made by compressing and molding polystyrene beads (EPS). The extruded thermal insulating plate (Isopink) is a thermal insulator having a plate shape made by compressing polystyrene, and a fine independent structure is filled with fluorocarbon which is gas having the lowest thermal conductivity, thereby enabling thermal insulation. The E-board is a product made by a combination of the Isopink and a PP-board, and may be a thermal insulator that prevents dew condensation. In this case, the PP-board is a plastic hollow plate manufactured by a process of extruding a raw material made by mixing, under an optimum condition, an admixture such as an inorganic filling material and a fire-resistive material with polypropylene, and non-woven fabric may be impregnated with both surfaces of the PP board. The heat-reflective thermal insulator is a product capable of being used for both interior and exterior materials, and may be a thermal insulator which has a surface made of an aluminum layer and thus has high durability, high heat resistance, high vibration resistance, and a high soundproof performance, thereby blocking radiant heat. The glass wool may be an inorganic mineral fiber thermal insulator made by melting glass at a high temperature, making the glass like fiber by using high-speed rotational force, and then molding the glass to a predetermined size. The vacuum insulated panel (VIP) may be manufactured based on the principle in which a vacuum state is formed in a thermal insulating plate to prevent heat transfer caused by conduction and convection, and a surface of the thermal insulating plate is surrounded by a heat-reflective thermal insulator to block radiant heat. The cellulose thermal insulator may be a sound absorbing thermal insulator manufactured by reusing paper such as newspaper. The aforementioned structure of the thermal insulation layer is just an example, and the present disclosure is not limited thereto.

The container 1000 includes the battery rack 200 in which one or more battery modules may be stacked and accommodated. When the battery modules are accommodated in the container 1000, it is necessary to fix the battery modules to the battery rack 200 in order to protect the battery modules from external swaying. Because a battery is vulnerable to impact, a fixing device is required to allow the battery rack 200 to protect the battery even from external vibration. Therefore, the battery modules are stacked and fixed by the battery rack 200, such that the battery modules may be accommodated in the container 1000.

The container 1000 for export has the common standard defined by the regulations of the International Standardization Organization (ISO). Therefore, it is necessary to efficiently utilize a restrictive space. The battery rack 200 according to the exemplary embodiment of the present disclosure may provide a space which may efficiently accommodate the batteries by maximizing the number of batteries that may be safely accommodated in the single container 1000.

The battery rack 200 of the present disclosure may be made of metal such as iron and aluminum, and may be made of a nonmetallic material such as plastic and acrylic. The metal has high rigidity and excellent moldability, and as a result, the metal is mainly used for an energy storage device. In addition, the nonmetallic material such as plastic, acrylic, and synthetic resin is light in weight, and may be manufactured to be transparent in accordance with intended use. Therefore, the battery rack 200 of the present disclosure may be manufactured by using various materials in accordance with an installation place and intended use. According to the exemplary embodiment of the present disclosure, all frames may have bolting structures, and the additional fixing device may be further provided to ensure secure coupling. In addition, all of the frames may also be coupled by means of a welding structure so that the frames are securely coupled. The aforementioned method of coupling the frames is just an example, and the present disclosure is not limited thereto.

The battery module may include the battery as well as electric wires or the like to connect a power supply device, a control device, a network device, and various types of devices in order to control the battery. The batteries may be manufactured in various forms by various manufacturers, and the various forms may include various shapes such as a circular shape and a polygonal shape.

In order to accommodate the batteries having various sizes, a module slide may have various shapes in accordance with the battery module. The battery module and the module slide may be coupled to each other by means of bolts, bolt holes, and nuts which are additionally provided.

The module slide may have a plate shape having a cross section bent at a right angle. In some instances, the module slide may have a box shape into which the battery module may be inserted, and a slide-type fastening method may be applied to easily mount the battery module without connecting the module slide and the battery module through the bolts and the nuts.

The container 1000 may include a refrigeration unit 300 which includes an evaporator 310, a compressor 320, and a condenser 330 and is provided adjacent to at least one of inner surfaces of the outer wall 110 of the container 1000 so as to provide cold air into the container 1000. The refrigeration unit 300 may cool air by using the evaporator 310, the compressor 320, and the condenser 330 in order to circulate the air in the container 1000 to cool the container 1000.

More specifically, a high-temperature and high-pressure refrigerant may be formed by the compressor 320. The high-temperature and high-pressure refrigerant is liquefied by the condenser 330, such that the temperature of the refrigerant may be decreased. The refrigerant may be converted into a low-pressure and low-temperature refrigerant while passing through an expansion valve. The refrigerant is vaporized in the evaporator 310 to absorb ambient energy, thereby cooling ambient air. In this case, a cooling effect may be obtained by discharging the cooled air to a desired position by using a fan.

The refrigeration unit 300 according to the exemplary embodiment of the present disclosure may be provided adjacent to at least one of the inner surfaces of the outer wall 110 of the container 1000. For example, the refrigeration unit 300 may be provided on at least one of a short sidewall, a long sidewall, a bottom wall, and a ceiling wall of the inner surfaces of the container 1000. The aforementioned position of the refrigeration unit 300 is just an example, and the present disclosure is not limited thereto.

The container 1000 may include air holes 400 through which the cold air produced by the refrigeration unit 300 is discharged. The air hole 400 may be a passageway for guiding the cold air produced by the refrigeration unit 300 to a cold air delivery duct 510. More specifically, the cold air produced by the refrigeration unit 300 needs to structurally pass through the air hole 400 so as to flow into the cold air delivery duct 510.

To increase a pressure of the cold air, the air hole 400 may have a structure of which the cross-sectional area is decreased in a direction from the refrigeration unit 300 to the cold air delivery duct 510. For example, the air hole 400 may have a cylindrical shape having a structure in which a cross-sectional area, which defines a circle, is decreased in the direction toward the cold air delivery duct 510, or may be a hexahedron having a structure in which a cross-sectional area, which defines a rhombus, is decreased in the direction toward the cold air delivery duct 510. The aforementioned structure of the air hole 400 is just an example, and the present disclosure is not limited thereto.

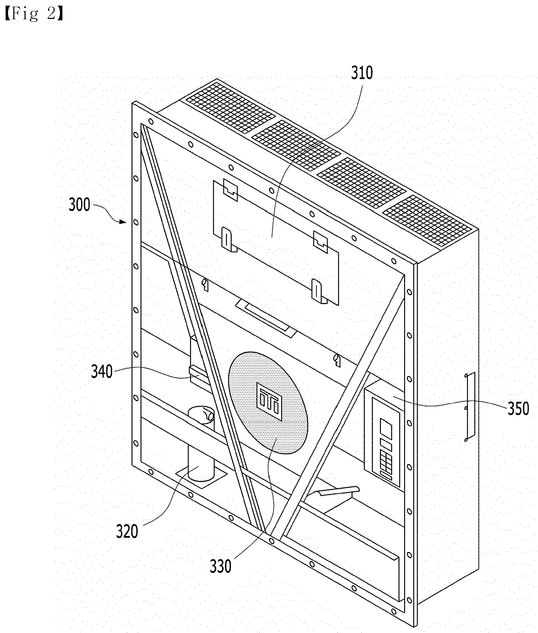

FIG. 2 illustrates the evaporator 310, the compressor 320, the condenser 330, a heater-thermal expansion valve 340, and a ventilation device 350 which are provided in the refrigeration unit 300 according to the exemplary embodiment of the present disclosure.

The compressor 320 may mean a machine for compressing gas such as air and increasing a pressure of the gas. In the case of the present disclosure, the compressor 320 may serve to form a high-temperature and high-pressure refrigerant in one of a saturated vapor state, a superheated vapor state, and a wet vapor state, and discharge the high-temperature and high-pressure refrigerant in order to operate the refrigeration unit 300.

The condenser 330 may mean a device which cools the vapor to absorb heat of the vapor, and condenses the vapor. The condenser 330 may cool the refrigerant vapor and eliminate condensation heat, thereby liquefying the high-pressure and high-temperature refrigerant vapor compressed by the compressor 320.

The heater-thermal expansion valve 340 may mean a heater-valve which decreases a pressure to a pressure at which the high-temperature and high-pressure liquid refrigerant, which is condensed and liquefied in the condenser 330, may be vaporized by throttling.

The evaporator 310 may mean a device which heats the refrigerant to change the refrigerant to the vapor, thereby obtaining the vapor. The evaporator 310 may serve to vaporize the refrigerant of which the pressure is decreased to a pressure at which the refrigerant may be vaporized in the heater-thermal expansion valve 340.

The refrigerant, which comes out of the evaporator 310, flows back to the compressor 320, such that a cycle is defined in the order of the compressor 320, the condenser 330, the heater-thermal expansion valve 340, and the evaporator 310, thereby operating the refrigeration unit 300.

The ventilation device 350 may provide a flow of air to products that require the circulation of fresh air in the container 1000. Because the cold air may leak during the ventilation, it may be necessary to continuously seal a ventilation opening when transporting frozen food. That is, the ventilation device 350 may not be an essential constituent element for cooling.

The aforementioned configuration of the refrigeration unit 300 is just an example, and the present disclosure is not limited thereto.

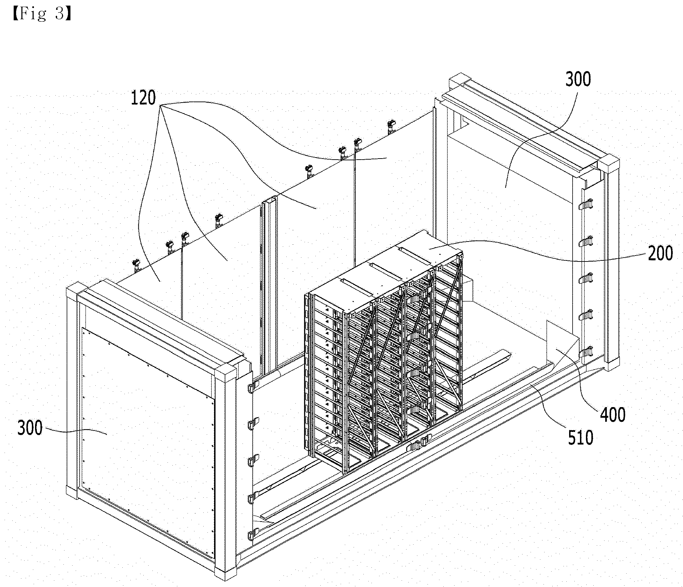

FIG. 3 illustrates the battery rack 200, the refrigeration unit 300, the air holes 400, and the cold air delivery duct 510 which are provided in the container 1000 according to the exemplary embodiment of the present disclosure.

The battery rack 200 according to the exemplary embodiment of the present disclosure may be provided everywhere on the bottom wall of the container 1000. For example, the battery rack 200 may be positioned close to the long sidewall of the outer wall 110. In addition, the battery rack 200 may be positioned close to the short sidewall on which the refrigeration unit 300 is present.

The battery rack 200 according to the exemplary embodiment of the present disclosure may be installed such that a user may easily push and move the battery rack 200 along a rail installed on the bottom wall of the container 1000. In this case, the rail is provided with a fixing pin, such that the battery rack 200 is pushed and moved along the rail and then may be securely fixed at the moved position by the fixing pin.

The battery racks 200 may be provided in two rows along the long sidewalls. In this case, a space in which the user may move may be provided between the two rows of the battery racks 200. Therefore, when there occurs a problem with the battery, the user may enter the provided space and solve the problem with the battery.

The cold air delivery duct 510 according to the exemplary embodiment of the present disclosure is provided adjacent to at least one of the inner surfaces of the outer wall 110 of the container 1000, and the cold air delivery duct 510 may be connected to the air hole 400. The cold air delivery duct 510 may be supplied with the cold air produced by the refrigeration unit 300 through the air hole 400.

The cold air delivery duct 510 may be provided adjacent to at least one of the inner surfaces of the outer wall 110 of the container 1000. For example, the cold air delivery duct 510 may be provided adjacent to one of the bottom wall, the short sidewall, the long sidewall, and the ceiling wall of the inner surfaces.

The cold air delivery duct 510 may be provided to be in parallel with an edge of the long sidewall of the container 1000. Alternatively, the cold air delivery duct 510 may be provided in a direction of a diagonal line that connects two edges of the long sidewalls. The aforementioned position at which the cold air delivery duct 510 is provided is just an example, and the present disclosure is not limited thereto.

The door 120 according to the exemplary embodiment of the present disclosure may be provided on at least one of the inner surfaces of the outer wall 110. The door 120 may be necessary to freely load and remove the battery rack 200 into/from the interior of the container 1000. In addition, the door 120 may be necessary to allow the user to enter and exit the container 1000 in order to solve problems with components that constitute the interior of the container 1000.

The door 120 may be a hinged door or a sliding door. The hinged door may be opened or closed by being rotated about a member such as a hinge provided on a vertical frame at one side. The sliding door may be opened or closed while being slid laterally along an installed rail.

A locking device may be installed on the door 120. The locking device may be at least one or a combination of a padlock type locking device, a key type locking device, a locking device using electronic passcodes, and a container locking rod handle.

The padlock type locking device may be configured to obtain a locking effect by installing a padlock between a coupler of a main body of the container 1000 and a coupler of the door 120. The padlock may be one of a key padlock, a security number padlock, and a strongbox padlock. The key type locking device may be a locking device which allows the user to insert a predetermined key into a keyhole and rotate the key in order to open or close the door 120. The locking device using electronic passcodes may be configured to unlock the door without a physical effort as the user inputs predetermined security codes to the locking device that is electronically operated. The container locking rod handle is connected to a long pipe connected to a hinge on the main body, and fixed to a fixing unit fixed to a part of the main body, thereby obtaining a locking effect. The aforementioned locking device is just an example, and the present disclosure is not limited thereto.

The door 120 may be provided on at least one of the short sidewall, the long sidewall, and the ceiling wall of the outer wall 110. If the door 120 is positioned on the short sidewall, the refrigeration unit 300 may be positioned on another short sidewall. If the door 120 is positioned on the long sidewall, the refrigeration unit 300 may be positioned on at least one of the short sidewalls. The door 120 may be positioned on the ceiling wall. In this case, the user may enter the container 1000 by using a ladder or a rope by opening the door 120 on the ceiling wall, and may load or remove the battery module into/from the interior of the container 1000. The aforementioned position of the door 120 is just an example, and the present disclosure is not limited thereto.

The plurality of doors 120 may be provided on the short sidewall, the long sidewall, or the ceiling wall. For example, one to four doors 120 may be provided on the long sidewall, and one to two doors 120 may be provided on the short sidewall. The aforementioned number of doors 120 is just an example, and the present disclosure is not limited thereto.

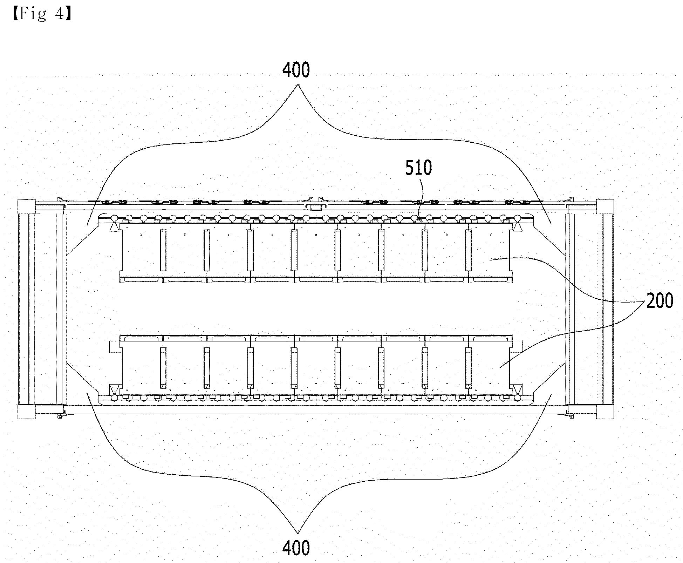

FIG. 4 illustrates the battery rack 200, the refrigeration unit 300, the air holes 400, and the cold air delivery duct 510, which are provided in the container 1000 according to the exemplary embodiment of the present disclosure, when viewed from the top side.

The interior of the container 1000 may include the air hole 400 through which the cold air of the refrigeration unit 300 flows to the cold air delivery duct 510, the cold air delivery duct 510 which delivers the cold air received from the air hole 400 to cold air discharge ducts 520, and the battery rack 200.

The number of air holes 400 may be one or more. The number of cold air delivery ducts 510 may be one or more. For example, as illustrated in FIG. 3, the number of air holes 400 connected to the refrigeration unit 300 may be four, and the number of cold air delivery ducts 510 connected to the air hole 400 may be two. The aforementioned number of air holes 400 and the aforementioned number of cold air delivery ducts 510 are just examples, and the present disclosure is not limited thereto.

The air hole 400 needs to be connected to the refrigeration unit 300, but the position is not limited. That is, the air hole 400 may be provided everywhere at upper, lower, left, and right sides of the inner surfaces of the refrigeration unit 300.

The cold air delivery duct 510 may be connected to the air hole 400. The cold air delivery duct 510 may be provided adjacent to at least one of the inner surfaces of the outer wall 110 of the container 1000. For example, the cold air delivery duct 510 may be provided adjacent to one of the bottom wall, the short sidewall, the long sidewall, and the ceiling wall of the inner surfaces.

The cold air delivery duct 510 may be provided such that a direction of the cold air delivery duct 510 is in parallel with the edge of the long sidewall of the container 1000. Alternatively, the cold air delivery duct 510 may be provided in the direction of the diagonal line that connects two edges of the long sidewalls. The aforementioned direction of the cold air delivery duct 510 is provided is just an example, and the present disclosure is not limited thereto.

The battery rack 200 according to the exemplary embodiment of the present disclosure may be positioned everywhere on the bottom wall of the container 1000. As illustrated in FIG. 4, the battery racks 200 are positioned adjacent to the long sidewalls of the outer wall 110, and may be disposed in two rows. In addition, the battery rack 200 may be positioned close to the short sidewall on which the refrigeration unit 300 is present.

The battery rack 200 according to the exemplary embodiment of the present disclosure may be installed such that a user may easily push and move the battery rack 200 along a rail installed on the bottom wall of the container 1000. In this case, the rail is provided with the fixing pin, such that the battery rack 200 is pushed and moved along the rail and then may be securely fixed at the moved position by the fixing pin.

The battery racks 200 may be provided in two rows along the long sidewalls. In this case, a space in which the user may move may be provided between the two rows of the battery racks 200. Therefore, when there occurs a problem with the battery, the user may enter the provided space and solve the problem with the battery.

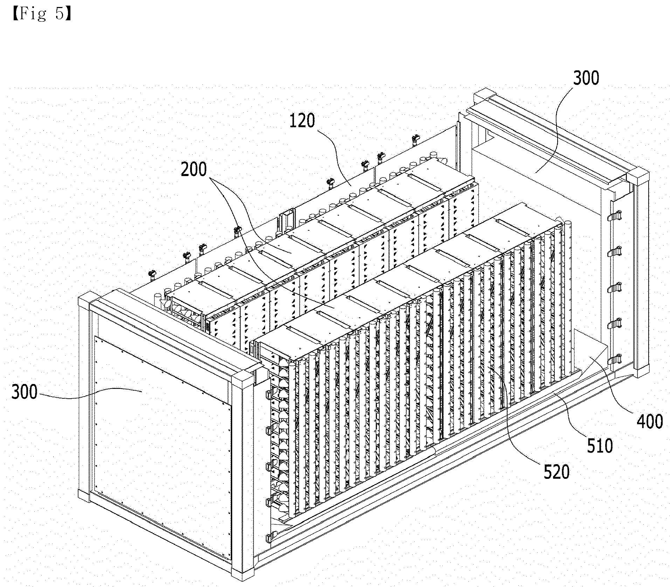

FIG. 5 illustrates the battery racks 200, the refrigeration units 300, the air holes 400, the cold air delivery duct 510, and the cold air discharge ducts 520 which are provided in the container 1000 according to the exemplary embodiment of the present disclosure.

The cold air discharge duct 520 according to the exemplary embodiment of the present disclosure is connected to the cold air delivery duct 510, and may have one or more cold air discharge ports 521.

The cold air discharge duct 520 is connected to the cold air delivery duct 510, and may serve to discharge the cold air, which is delivered from the cold air delivery duct 510, to the air at the periphery of the cold air discharge duct 520. For example, the cold air discharge duct 520 may be perpendicularly coupled and connected to the cold air delivery duct 510, or may be diagonally connected to the cold air delivery duct 510 regardless of an angle. The aforementioned direction in which the cold air discharge duct 520 and the cold air delivery duct 510 are coupled to each other is just an example, and the present disclosure is not limited thereto.

The cold air discharge duct 520 according to the exemplary embodiment of the present disclosure may be made of a soft material. The softness may mean a tender property or a flexible property. For example, the soft material may be PVC soft raw fabric, a windshield vinyl, or a soft polyurethane foam.

The PVC soft raw fabric is one of thermoplastic plastic, and is also called polyvinyl chloride or vinyl chloride resin that may be abbreviated to PVC. The PVC soft raw fabric is a plastic of which the main component is vinyl chloride, and the PVC soft raw fabric may be processed to produce wide products such as a film, a sheet, a molded product, and a cap. The PVC, which is a representative material of plastic, is a material originally having a hard property, but the PVC may be used to manufacture products after increasing flexibility and resiliency by using a phthalates or adipic acid based plasticizer. The windshield vinyl is vinyl produced by using soft PVC, and has high flexibility and resiliency because the windshield vinyl is made of a thin material, such that the windshield vinyl may be expanded by wind. The soft polyurethane foam may mean polyurethane foam having a soft property. The polyurethane foam is a porous material in a sponge state which is made of polyol and isothiocyanate which are used for a cushioning material and a thermal insulator, and the polyurethane foam may have high thermal insulation, excellent electrical insulation, and high strength. The aforementioned soft material is just an example, and the present disclosure is not limited thereto.

The cold air discharge duct 520 made of a soft material is expanded tautly by a pressure of the cold air supplied from the refrigeration unit 300, and then may discharge the cold air. In this case, a flow rate of the cold air, which comes out of the cold air discharge port 521 after the cold air discharge duct 520 made of a soft material is expanded, may be more uniformly distributed in comparison with a flow rate of the cold air which comes out of the cold air discharge port 521 of the cold air discharge duct 520 made of a hard material. More specifically, an effect of allowing air flow rates from the respective cold air discharge ports 521 to be equal to one another may be obtained in the case in which the cold air discharge duct 520 is made of a soft material.

The cold air discharge duct 520 according to the exemplary embodiment of the present disclosure may be fixed by being detachably coupled to a fastener positioned on the ceiling wall of the inner surfaces of the outer wall 110. More specifically, an end of the cold air discharge duct 520 may be fixed by being detachably coupled to the fastener positioned on the ceiling wall. In addition, the cold air discharge duct 520 may be fixed as one or more fasteners positioned at a side of the cold air discharge duct 520 are detachably coupled to one or more fasteners positioned at a part of the battery rack 200. The aforementioned position at which the cold air discharge duct 520 is fastened is just an example, and the present disclosure is not limited thereto.

The fasteners may be connected by at least one of a loop type structure, a Velcro structure, and a zipper structure. The loop type structure may couple a loop, which is connected to the cold air discharge duct 520, to a loop of the fastener, thereby fixing the cold air discharge duct 520. The Velcro structure is a structure in which hooks are provided at one side, and loops are provided at the other side, such that the hooks and the loops are attached or detached to/from one another, and as a result, the Velcro structure may fix the cold air discharge duct 520 to the fastener. The zipper structure is a closing tool including two tapes each having teeth formed at an edge thereof, and the teeth may be engaged with one another in a slide manner, thereby fixing the cold air discharge duct 520 to the fastener. The aforementioned types of fasteners are just examples, and the present disclosure is not limited thereto.

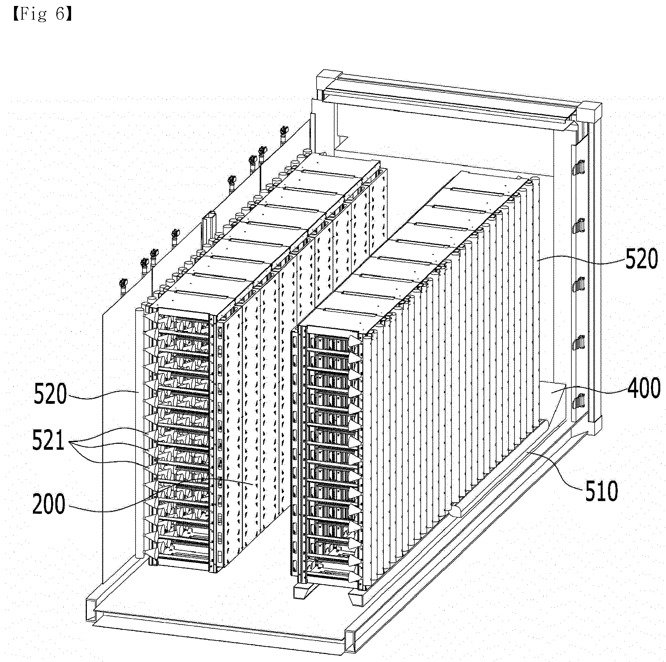

FIG. 6 illustrates an enlarged view of the battery racks 200, the refrigeration unit 300, the air hole 400, the cold air delivery duct 510, the cold air discharge ducts 520, and the cold air discharge ports 521 which are provided in the container 1000 according to the exemplary embodiment of the present disclosure.

The cold air discharge duct 520 according to the exemplary embodiment of the present disclosure may be provided with the one or more cold air discharge ports 521. The one or more cold air discharge ports 521 are provided in the cold air discharge duct 520, and may serve as passageways for discharging the cold air to the air at the periphery of the cold air discharge duct 520.

A shape of the cold air discharge port 521 may be one of a circular shape, an elliptical shape, and a polygonal shape. If the cold air discharge port 521 has a circular shape, the cold air may be spread in a conical shape while being discharged. If the cold air discharge port 521 has an elliptical shape which is thin and elongated in a vertical direction, the cold air may be continuously delivered to the battery module present at an elliptical position. The aforementioned shape of the cold air discharge port 521 is just an example, and the present disclosure is not limited thereto.

The directions of the cold air discharge ports 521 may mean directions of 360 degrees which are all of the directions of a cross section of the cold air delivery duct 510. If the cold air discharge ports 521 are provided in various directions, the air in the container 1000 may be uniformly cooled.

The cold air discharge port 521 according to another exemplary embodiment of the present disclosure may be directed toward the position at which the battery rack 200 is positioned. The cold air discharge port 521 is directed toward the position at which the battery rack 200 is positioned, such that when the cold air is discharged directly to the battery rack 200, it is possible to obtain an effect of controlling heat generation in a shorter time.

The cold air discharge port 521 according to still another exemplary embodiment of the present disclosure may be provided to correspond to at least a part of a layer where the battery module is present in the battery rack 200. When the cold air discharge port 521 is provided to correspond to only the layer where the battery module is present, a flow rate of cold air for each cold air discharge port 521 is increased, and as a result, a flow rate of the cold air discharged directly to the battery module is increased, thereby more efficiently controlling heat generated by the battery module.

The cold air discharge port 521 according to yet another exemplary embodiment of the present disclosure may be openable and closable. For example, some of the plurality of cold air discharge ports 521 may be sealed. In this case, a flow rate of cold air for each opened cold air discharge port 521 is increased, and as a result, it is possible to obtain an effect of increasing intensity of a flow of the cold air from the opened cold air discharge port 521. On the contrary, when the existing sealed cold air discharge ports 521 are opened, it is possible to obtain an effect of decreasing intensity of a flow of the cold air from the opened cold air discharge port 521.

A size of the cold air discharge port 521 according to still yet another exemplary embodiment of the present disclosure may be adjusted. The cold air may be widely spread in the container 1000 at a low speed if the size of the cold air discharge port 521 is large, and the cold air may reach a desired cooling position at a high speed if the size of the cold air discharge port 521 is small.

The description about the suggested exemplary embodiments is provided so that a person with ordinary skill in the art to which the present disclosure pertains may use or carry out the present disclosure. Various modifications from the exemplary embodiments will be obvious to the person skilled in the art, and general principles defined herein may be applied to other exemplary embodiments without departing from the scope of the present disclosure. Accordingly, the present disclosure is not limited to the exemplary embodiments suggested herein, but should be construed within the widest scope that complies with the principles suggested herein and novel features.

## Claims

1. A functional container which provides a hermetic space therein, the container comprising:
an outer wall which includes a thermal insulation layer and is formed in the form of a hexahedron to provide the hermetic space;
a battery rack in which one or more battery modules are stacked and accommodated;
a refrigeration unit which includes an evaporator, a compressor, and a condenser, and is provided adjacent to at least one of inner surfaces of the outer wall of the container to provide cold air into the container; and
an air hole through which the cold air produced by the refrigeration unit is discharged.

2. The container of claim 1, comprising:
one or more cold air delivery ducts,
wherein the cold air delivery duct is provided adjacent to at least one of the inner surfaces of the outer wall of the container, and connected to the air hole.

3. The container of claim 2, comprising:
one or more cold air discharge ducts,
wherein the cold air discharge duct is connected to the cold air delivery duct, and has one or more cold air discharge ports.

4. The container of claim 3, wherein the cold air discharge duct is provided adjacent to at least one of the inner surfaces of the outer wall of the container, and the cold air discharge port is directed toward a position at which the battery rack is positioned.

5. The container of claim 4, wherein the cold air discharge port is provided to correspond to at least a part of a layer where the battery module is present in the battery rack.

6. The container of any one of claims 3 to 5, wherein the cold air discharge duct is made of a soft material.

7. The container of claim 6, wherein the cold air discharge duct is fixed by being detachably coupled to a fastener positioned on a ceiling wall of the inner surfaces of the outer wall.

8. The container of claim 1, wherein the refrigeration unit is provided adjacent to a short sidewall of the inner surfaces of the outer wall.

9. The container of claim 8, wherein the refrigeration units are provided adjacent to two short sidewalls of the inner surfaces of the outer wall.

10. The container of claim 8 or 9, comprising:
one or more cold air delivery ducts,
wherein the cold air delivery duct is provided adjacent to a lower side of a long sidewall of the inner surfaces of the outer wall, and connected to the air hole.

11. The container of claim 1, comprising:
one or more doors,
wherein the door is provided on at least one of the inner surfaces of the outer wall.

12. The container of claim 11, wherein the doors are provided on one or more long sidewalls of the inner surfaces of the outer wall.
